**Europäisches Patentamt**

**European Patent Office**

**Office européen des brevets**

(19)

(11) Veröffentlichungsnummer: **0 111 940**

**A1**

(12) # EUROPÄISCHE PATENTANMELDUNG

(21) Anmeldenummer: **83113006.7**

(22) Anmeldetag: **22.12.83**

(51) Int. Cl.³: **B 25 J 17/00**
**B 25 J 1/02**

(30) Priorität: **23.12.82 DE 3247789**

(43) Veröffentlichungstag der Anmeldung:
**27.06.84 Patentblatt 84/26**

(84) Benannte Vertragsstaaten:
**CH DE FR GB IT LI SE**

(71) Anmelder: **Klöckner-Humboldt-Deutz**
**Aktiengesellschaft**
**Deutz-Mülheimer-Strasse 111 Postfach 80 05 09**
**D-5000 Köln 80(DE)**

(71) Anmelder: **GASA-Produktion GmbH**
**Siemensstrasse 8**
**D-8752 Hösbach(DE)**

(72) Erfinder: **Schreck, Karl, Dr.**
**Hasengarten 27**
**D-6370 Oberursel 4(DE)**

(72) Erfinder: **Schiller, Hans-Günter**
**Römer Strasse 4**
**D-6382 Friedrichsdorf(DE)**

(72) Erfinder: **Klatt, Hans-Georg**
**Weinbergstrasse 60**
**D-6370 Oberursel 4(DE)**

(72) Erfinder: **Gauss, Dieter W.**
**Siemensstrasse 8**
**D-8752 Hösbach(DE)**

(74) Vertreter: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) **Vorrichtung zum Manipulieren eines Gegenstandes.**

(57) Eine Vorrichtung zum Manipulieren eines Gegenstandes, insbesondere eines Werkzeugs oder Meßfühlers, umfaßt eine geradlinig längs ihrer Achse bewegbare Säule, eine aus mehreren stabartigen, gelenkig miteinander verbundenen Getriebegliedern bestehende Getriebekette, die an ihrem einen, ersten Ende gelenkig an der Säule aufgehängt ist und an ihrem anderen, zweiten Ende den Gegenstand trägt, wobei die Getriebeglieder relativ zueinander und die Getriebekette relativ zur Säule um zueinander parallele Gelenkachsen schwenkbar sind, und eine Antriebseinrichtung zum Schwenken der Getriebeglieder relativ zueinander sowie zum Schwenken der Getriebekette relativ zur Säule. Diese Vorrichtung ermöglicht durch gesteuertes Abknicken der Getriebekette um die Gelenkachsen den von der Vorrichtung getragenen Gegenstand auch an schwer zugängliche Stellen eines Werkstücks zu führen, wie dies beispielsweise bei der Rißprüfung von kompliziert geformten Werkstücken wünschenswert ist.

./...

Fig. 4

PELLMANN - GRAMS - STRUIF

Dipl.-Ing. H. Tiedtke

0111940

Bavariaring 4, Postfach 20 24 03
8000 München 2
Tel.: 0 89 - 53 96 53
Telex: 5-24 845 tipat
Telecopier: 0 89 - 537377
cable: Germaniapatent München
22. Dezember 1983
EP 3569

- 1 -

KLÖCKNER-HUMBOLDT-DEUTZ AG,
Köln

und

GASA-Produktion GmbH
Hösbach

**Vorrichtung zum Manipulieren eines Gegenstandes**

Die Erfindung bezieht sich auf eine Vorrichtung zum Manipulieren eines Gegenstandes, insbesondere eines Werkzeugs oder eines Meßfühlers.

Beispielsweise beim Abtasten und Ausmessen eines Modells, beim Ausmessen und Prüfen eines Werkstücks oder beim Anreißen eines Werkstücks ist es notwendig, ein Werkzeug oder einen Meßfühler entlang der Oberfläche eines Werkstücks oder Modells zu führen. Bekannte Vorrichtungen zu diesem Zweck, die als Manipulatoren bezeichnet werden, weisen mehrere senkrecht zueinander stehende Arme auf, die über Kreuzschlitten so miteinander verbunden sind,

Dresdner Bank (München) Kto. 3939 844          Bayer Vereinsbank (München) Kto. 508 941          Postscheck (München) Kto. 670-43-804

0111940

daß das freie Ende eines der Arme, das das Werkzeug oder den Meßfühler trägt, an jeden Punkt innerhalb eines begrenzten dreidimensionalen Raumes gebracht werden kann. Nachteilig bei diesen bekannten Vorrichtungen ist, daß sie es bei Modellen und Werkstücken mit komplizierten geometrischen Formen, beispielsweise Hinterschneidungen und Hohlräumen, häufig nicht ermöglichen, den Gegenstand an alle gewünschten Stellen zu bringen. Dies gilt insbesondere für Werkstücke und Modelle mit weniger gut zugänglichen Hohlräumen.

Der Erfindung liegt die Aufgabe zugrunde, die Vorrichtung der gattungsgemäßen Art derart auszubilden, daß sie es ermöglicht, den Gegenstand auch bei komplizierteren geometrischen Formen an alle gewünschten Stellen eines Werkstücks oder Modells zu bringen.

Diese Aufgabe wird erfindungsgemäß bei der gattungsgemäßen Vorrichtung gelöst durch eine geradlinig längs ihrer Achse bewegbare Säule, eine aus mehreren, d.h. zumindest zwei, stabartigen, gelenkig miteinander verbundenen Getriebegliedern bestehende Getriebekette, die an ihrem einen, ersten Ende gelenkig an der Säule aufgehängt ist und an ihrem anderen, zweiten Ende den Gegenstand trägt, wobei die Getriebeglieder relativ zueinander und die Getriebekette relativ zur Säule um zueinander parallele Gelenkachsen schwenkbar sind, und eine Antriebseinrichtung zum Schwenken der Getriebeglieder relativ zueinander sowie zum Schwenken der Getriebekette relativ zur Säule.

Bei der erfindungsgemäßen Vorrichtung ermöglicht die Getriebekette und deren schwenkbare Anlenkung an der Säule ein mehrfaches Abknicken des aus der Säule und der Getriebekette bestehenden Halters für den Gegenstand, so daß dieser Halter auch komplizierteren Formen eines Werkstücks oder Modells in seinem Verlauf angepaßt wer-

0111940

den kann. Beispielsweise kann die Säule in eine Öffnung eines Hohlkörpers eingeführt werden und kann die Getriebekette derart seitwärts zur Innenwand des Hohlkörpers ausgerichtet werden, daß dort auch Hinterschneidungen und Unterbereiche des Hohlraumes erreicht werden können.

In vorteilhafter Ausbildung der Erfindung kann vorgesehen sein, daß die Gelenkachse zwischen der Getriebekette und der Säule senkrecht zu einer deren Achse enthaltenden Ebene verläuft, wobei sich vorzugsweise die Gelenkachse und die Achse der Säule schneiden. Diese Ausbildung ermöglicht es, die Getriebekette und die Säule miteinander fluchtend auszurichten, so daß die Vorrichtung auch durch eine enge Öffnung in ein Werkstück bzw. ein Modell eingeführt werden kann.

Die Säule, die vorzugsweise senkrecht verläuft, kann um ihre Achse drehbar sein, wodurch die Anzahl der Freiheitsgrade bei der Bewegung des Gegenstandes erhöht ist.

Um die Anpassungsfähigkeit der Vorrichtung an komplizierte Formen noch zu erhöhen, kann ferner vorgesehen sein, daß zumindest eines der Getriebeglieder, und zwar vorzugsweise das der Säule nächste, erste Getriebeglied, längenveränderbar ist und daß die Antriebseinrichtung einen Stellmechanismus für die Längenänderung umfaßt.

Vorzugsweise hat jedes Getriebeglied im wesentlichen die Form eines flachen Quaders, wobei die zugeordneten Gelenkachsen an zwei entgegengesetzt liegenden Schmalseiten des Quaders verlaufen. Diese flach-quaderförmige Ausbildung jedes Getriebegliedes ermöglicht es, der Getriebekette in einer der zu ihrer Längsrichtung senkrechten Richtungen eine sehr kleine Abmessung zu geben, wobei dennoch durch die relativ grössere Abmessung in der anderen zur Längsrichtung senkrechten Richtung für hohe Steifigkeit der Getriebekette gesorgt ist.

Die Anpaßbarkeit der erfindungsgemäßen Vorrichtung an komplizierte Formen kann ferner dadurch erhöht sein, daß auch der Gegenstand am zweiten Ende der Getriebekette um eine Gelenkachse schwenkbar ist, wobei auch diese Schwenkung mittels der Antriebseinrichtung bewirkt wird.

Für zahlreiche Werkstücke und Modelle hat es sich als besonders zweckmäßig erwiesen, wenn die Getriebekette aus drei stabartigen Getriebegliedern besteht, wobei die maximale Länge der Getriebeglieder vom säulennächsten Getriebeglied zu den folgenden Getriebegliedern zunehmend geringer ist. Dadurch ist einerseits für hohe Anpassungsfähigkeit an komplizierte Formen, andererseits auch für hohe Steifigkeit der Getriebekette gesorgt.

Die Antriebseinrichtung der Vorrichtung weist vorzugsweise für jede der vorgesehenen Schwenkbewegungen und gegebenenfalls für die Drehung der Säule um ihre Achse einen eigenen elektrischen Schrittmotor auf, so daß eine genaue Steuerung der einzelnen Bewegungen möglich ist.

Weitere vorteilhafte Ausgestaltungen der Erfindung sind in den Unteransprüchen gekennzeichnet.

Ein Ausführungsbeispiel der Erfindung ist in den Zeichnungen dargestellt und wird im folgenden näher erläutert. Es zeigen:

Fig. 1 eine Seitenansicht von wesentlichen Teilen eines Ausführungsbeispiels der erfindungsgemäßen Vorrichtung;

Fig. 2 eine Draufsicht gemäß A-B in Fig. 1;

Fig. 3 eine schematische, perspektivische Ansicht einer

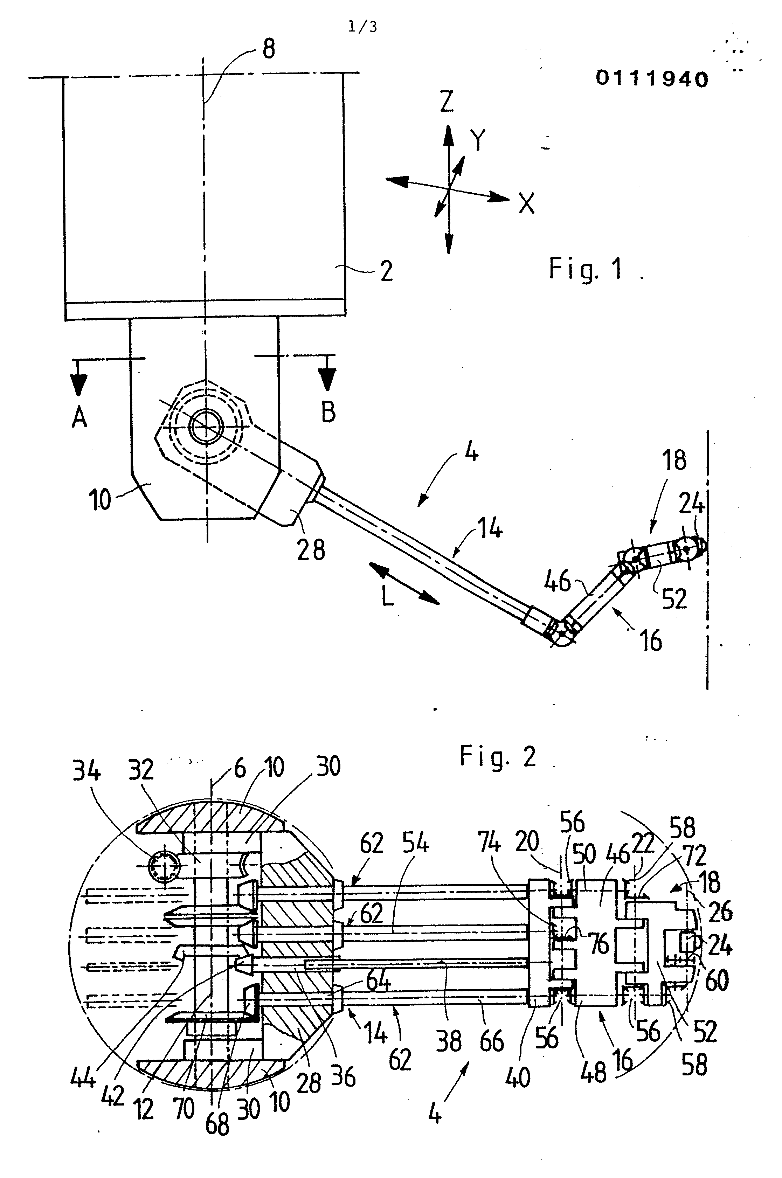

Prüfanlage, bei der die Vorrichtung gemäß den Fig. 1 und 2 angewendet ist; und

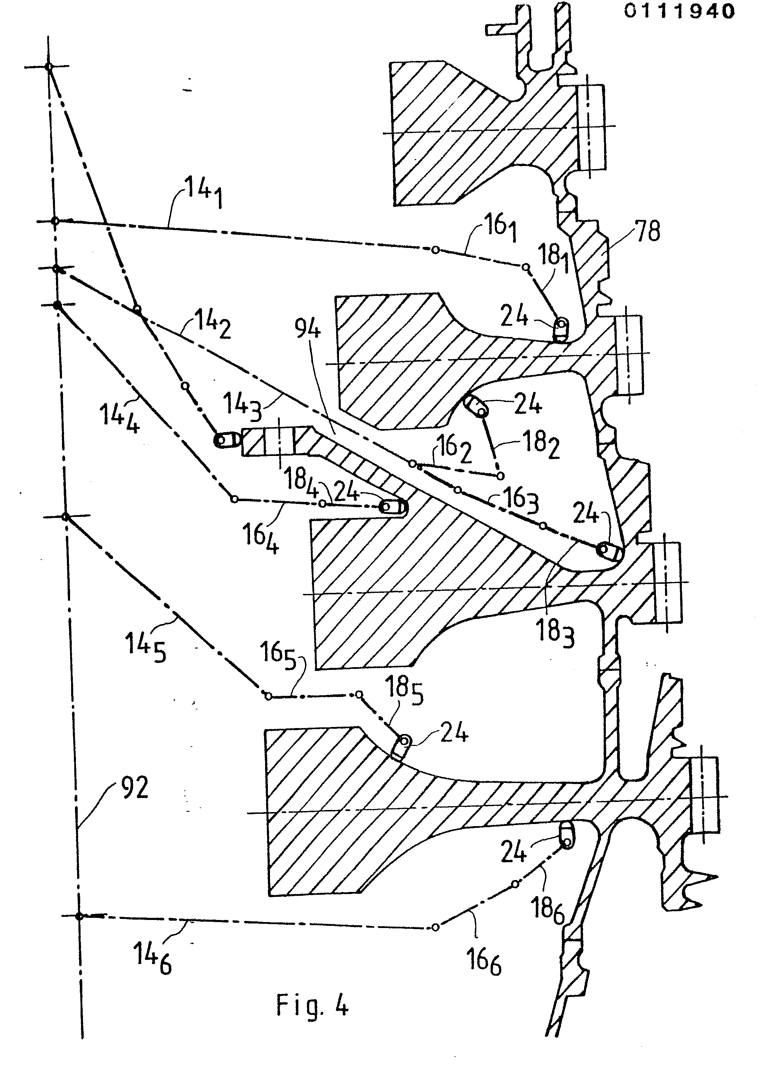

Fig. 4 eine schematische Darstellung zur Erläuterung der Arbeitsweise der Vorrichtung und Anlage gemäß der Fig. 1 bis 3.

Die in den Fig. 1 und 2 dargestellte Vorrichtung umfaßt eine Säule 2 sowie eine Getriebekette 4, die an ihrem einen, ersten Ende schwenkbar an der Säule 2 angelenkt ist, wobei die Gelenkachse 6 die Achse 8 der Säule 2 schneidet und senkrecht zu dieser Achse 8 verläuft, wie die Fig. 1 und 2 erkennen lassen.

Die Säule 2 ist außen zylindrisch geformt und ist vorzugsweise senkrecht, d.h. in Richtung der Z-Achse, angeordnet. Am in Fig. 1 unteren Ende der Säule 2 sind zwei Wangen 10 befestigt, an denen ein zur Gelenkachse 6 konzentrischer, zylindrischer Lagerbolzen 12 befestigt ist.

Die Getriebekette 4 ist aus mehreren Getriebegliedern aufgebaut, und zwar beim dargestellten Ausführungsbeispiel aus einem säulennächsten ersten Getriebeglied 14, einem gelenkig mit diesem verbundenen zweiten Getriebeglied 16 und einem gelenkig mit dem zweiten Getriebeglied verbundenen Getriebeglied 18. Die Gelenkachse 20 zwischen dem ersten Getriebeglied 14 und dem zweiten Getriebeglied 16, die Gelenkachse 22 zwischen dem zweiten Getriebeglied 16 und dem dritten Getriebeglied 18 sowie die Gelenkachse 6 zwischen der Getriebekette 4 und der Säule 2 verlaufen sämtlich parallel zueinander. Am freien, zweiten Ende der Getriebekette 4, d.h. am dritten Getriebeglied 18, ist schwenkbar der zu manipulierende Gegenstand 24 angelenkt, bei dem es sich beispielsweise um einen Meßfühler in Form einer Prüfsonde für Ultraschall- oder Wirbelstromrißprüfungen handeln kann. Die Gelenkachse 26, um die der Gegenstand 24 relativ zum dritten Getriebeglied 18 schwenkbar ist, verläuft parallel zu den übrigen Gelenkachsen 6, 20 und 22.

Wie die Fig. 1 und 2 erkennen lassen, hat jedes Getriebeglied 14, 16 und 18 im wesentlichen die Form eines flachen Quaders, wobei die beiden einem Getriebeglied zugeordneten Gelenkachsen nahe bei zwei gegenüberliegenden Schmalseiten des flachen Quaders verlaufen. Die geringste Abmessung haben die Getriebeglieder 14, 16 und 18 in gleicher Richtung, nämlich in Richtung der Z-Achse in Fig. 1, so daß die Getriebekette 4 über ihre gesamte Länge ein in dieser Richtung flaches Gebilde ist. Wie ferner insbesondere Fig. 1 erkennen läßt, hat das erste Getriebeglied 14 eine deutlich grössere Länge als das zweite Getriebeglied 16, das wiederum eine grössere Länge als das dritte Getriebeglied 18 hat.

Das erste Getriebeglied 16 weist einen säulenseitigen, gabelförmigen Kopf 28 auf, der mit zwei Ansätzen 30 'schwenkbar auf dem Lagerbolzen 12 gelagert ist. Am einen der beiden Ansätze 30 ist ein zur Gelenkachse 6 koaxiales Schneckenrad 32 befestigt, das mit einer Schnecke 34 kämmt, die mittels eines nicht dargestellten elektrischen Schrittmotors, der in der Säule 2 angeordnet ist und Bestandteil der Antriebseinrichtung der Vorrichtung ist, antreibbar ist. Durch Drehen der Schnecke 34 kann die Getriebekette 4 um die Gelenkachse 6 so geschwenkt werden, daß das erste Getriebeglied 14 bezüglich der Säule 2 eine gewünschte Stellung einnimmt.

Das erste Getriebeglied 14 ist in seiner Länge, d.h. in seiner Erstreckung in Richtung eines Doppelpfeils L, veränderbar. Zu diesem Zweck dient ein Stellmechanismus, der eine im Kopf 28 drehbar, jedoch axial unverschiebbar gelagerte Gewindehülse 36 sowie eine mit einem Außengewinde versehene Spindel 38 umfaßt, die mit der Gewindehülse 36 in Eingriff steht. An seinem vom Kopf 28 abgewandten Ende weist das Getriebeglied 14 ein Endstück 40 auf, an dem die Spindel 38 so befestigt ist, daß sie relativ zum Endstück 40 weder gedreht noch verschoben werden kann. Die Anordnung aus der Gewindehülse 36 und der Spindel 38 verläuft in Längsrichtung des Getriebegliedes 14, d.h. in Richtung des Doppelpfeils L. Am in Fig. 2 linken Ende der Gewindehülse 38 ist eine Kegelritzel 42 befestigt, das mit einem Kegelrad 44 kämmt, das koaxial zum Lagerbolzen 12 angeordnet und auf diesem drehbar gelagert ist. Das Kegelrad 44 ist mittels eines nicht dargestellten Antriebsmotors des Stellmechanismus, der zur Antriebseinrichtung der Vorrichtung gehört, antreibbar. Durch Drehen der Gewindehülse 36 relativ zur Spindel 38 wird die Länge der Anordnung aus der Gewindehülse 36 und der Spindel 38 und somit die Länge des Getriebegliedes 14 verändert.

Für die gelenkige Verbindung zwischen dem ersten Getriebeglied 14 und dem zweiten Getriebeglied 16 sorgen nicht dargestellte, geeignete Lagerbolzen, die konzentrisch zur Gelenkachse 20 angeordnet sind. Das Getriebeglied 16 besteht beim dargestellten Ausführungsbeispiel im wesentlichen aus einem quaderförmigen Block 46, der mit Ansätzen und Lagerbohrungen für die Schwenklager, die für die Schwenkbewegungen um die Gelenkachsen 20 und 22 erforderlich sind, sowie für Abschnitte von noch zu erläuternden Wellen 48 und 50 versehen ist. Aus einem ähnlichen Block 52 ist das Getriebeglied 18 aufgebaut, das an seinem freien Ende eine Ausnehmung aufweist, in der der Gegenstand 24 schwenkbar angeordnet ist.

Die Antriebsvorrichtung der Vorrichtung umfaßt für jede der Schwenkungen um eine der Gelenkachsen 20, 22 und 26 einen Übertragungsmechanismus, zu dem eine drehbare Welle, nämlich die Welle 48 bzw. die Welle 50 bzw. eine Welle 54, gehört.

Die Welle 48, die im Bereich der Getriebeglieder 16 und 18 lediglich schematisch durch ihre strichpunktierte Mittellinie angedeutet ist, ist Bestandteil des Übertragungsmechanismus zum Schwenken des Gegenstandes 24 um die Gelenkachse 26 und ist als Gelenkwelle ausgebildet, die dort, wo sie die Gelenkachsen 20 und 22 schneidet, jeweils ein Wellengelenk 56 aufweist, das beim dargestellten Ausführungsbeispiel aus drei miteinander kämmenden Kegelrädern besteht, von denen das mittlere koaxial zur jeweiligen Gelenkachse 20 bzw. 22 angeordnet und auf der Gelenkachse frei drehbar ist. Am in Fig. 2 rechten Ende der Welle 48 ist ein als Kegelrad ausgebildetes Zahnrad 58 befestigt, das über ein schematisch dargestelltes Getriebe in Eingriff mit einem als Stirnrad ausgebildeten verzahnten Element 60 steht, das koaxial zur Gelenkachse 26 drehfest mit dem Gegenstand 26 verbunden ist, so daß eine Drehung der Welle 48 eine Schwenkung des Gegenstandes 24 um die Gelenkachse 26 bewirkt.

Im Bereich des längenveränderbaren Getriebegliedes 14 weist die Welle 48 einen längenveränderbaren Wellenabschnitt 62 auf. Dieser umfaßt eine im Kopf 28 drehbar und axial nicht verschiebbar gelagerte Hülse 64 sowie einen Stab 66, der mit der Hülse 64 beispielsweise mit Hilfe einer Nut-Feder-Verbindung drehfest, jedoch in Axialrichtung relativ zueinander verschiebbar in Eingriff steht, und im Endstück 40 drehbar und axial unverschiebbar gelagert ist. Aufgrund dieser Ausbildung kann von der Hülse 64 zum Stab 66 und somit zu dem mit diesem verbundenen Wellengelenk 56 auf der Gelenkachse 20 ein Drehmoment übertragen werden, und zwar unabhängig davon, welche Schiebestellung der Stab 66 bezüglich der Hülse 64 einnimmt. Am in Fig. 2 linken Ende der Hülse 64 ist ein

0111940

Kegelrad 68 befestigt, das mit einem Kegelrad 70 kämmt, das drehbar auf dem Lagerbolzen 12 gelagert und mittels eines nicht dargestellten elektrischen Schrittmotors antreibbar ist, der in der Säule 2 angeordnet ist und Bestandteil der Antriebseinrichtung der Vorrichtung ist. Durch gesteuertes Drehen des Kegelrades 70 wird mit Hilfe des vorstehend beschriebenen Übertragungsmechanismus der Gegenstand 24 in die gewünschte Schwenkstellung gebracht. Das Vorhandensein der Welle 48 behindert dabei nicht die Möglichkeit, die Länge des Getriebegliedes 14 zu verändern.

Die Welle 50 ist Bestandteil des Übertragungsmechanismus, der zum Schwenken des Getriebegliedes 18 um die Gelenkachse 22 dient und hat eine der Ausbildung der Welle 48 entsprechende Ausbildung, wobei lediglich der Unterschied besteht, daß die Welle 50 nur bis zur Gelenkachse 22 führt und daß das dort am Wellenende befestigte Zahnrad 58 mit einem als Kegelrad ausgebildeten verzahnten Element 72 kämmt, das koaxial zur Gelenkachse 22 angeordnet und am Block 52 befestigt ist. Im Bereich des längenveränderbaren Getriebegliedes 14 weist auch die Welle 50 einen längenveränderbaren Wellenabschnitt 62 auf, und der Antrieb der Welle 50 erfolgt auf ähnliche Weise wie der Antrieb der Welle 48 mittels eines zugeordneten elektrischen Schrittmotors, der in der Säule 2 angeordnet und nicht dargestellt ist.

Die Welle 54 des Übertragungsmechanismus zum Schwenken des zweiten Getriebegliedes 16 relativ zum ersten Getriebeglied 14 besteht lediglich aus dem längenveränderbaren Wellenabschnitt 62, der die gleiche Ausbildung wie die längenveränderbaren Abschnitte 62 der Wellen 48 und 50 hat. An ihrem in Fig. 2 rechten Ende trägt die Welle 54 ein als Kegelrad ausgebildetes Zahnrad 74, das mit einem verzahnten Element 76 kämmt, das koaxial zur Gelenkachse 20 angeordnet und am Block 46 befestigt ist, so daß durch eine Drehung der Welle 54 das Getriebeglied 16 um die Gelenkachse 20 relativ zum Getriebeglied 14 geschwenkt wird. Der Antrieb der Welle 54 erfolgt auf ähnliche Weise wie der Antrieb der Wellen 48 und 50 mittels eines eigenen elektrischen Schrittmotors, der in der Säule 2 angeordnet und nicht dargestellt ist.

Bei dem längenveränderbaren Getriebeglied 14 bilden die längenveränderbaren Wellenabschnitte 62 zusammen mit dem Stellmechanismus aus der Gewindehülse 36 und der Spindel 38 die einzigen mechanischen Verbindungen zwischen den beiden Enden des Getriebsgliedes 14, d.h. zwischen dem Kopf 28 und dem Endstück 40. Die längenveränderbaren Wellenabschnitte 62 erfüllen somit zugleich die Funktion einer Führung bei einer Relativverschiebung zwischen dem Endstück 40 und dem Kopf 28.

In Fig. 2 sind links gestrichelt die Enden der Stäbe 66 und der Spindel 38 für den Fall dargestellt, daß das Endstück 40 in Fig. 2 nach links verschoben ist, d.h. daß das erste Getriebeglied 14 auf kurze Länge eingestellt ist.

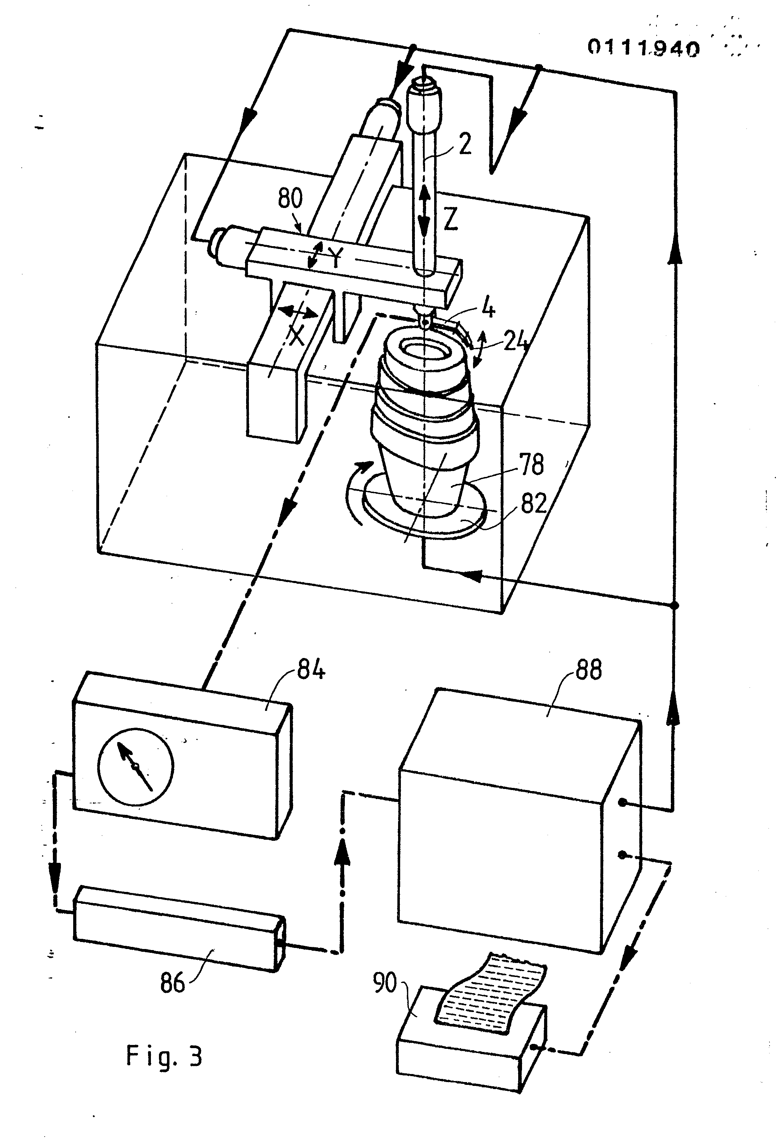

Fig. 3 zeigt perspektivisch und schematisch eine Prüfanlage, die zur Rißprüfung an einem Prüfling 78 dient. Die vorstehend anhand der Fig. 1 und 2 erläuterte Vorrichtung ist Bestandteil dieser Prüfanlage, und zwar ist die Säule 2 in Richtung ihrer Achse 8 verschiebbar an einem Kreuzschlitten 80 angeordnet, der eine Verschiebung der Säule 2 relativ zum Prüfling 78 in den beiden zur Z-Achse senkrechten Richtungen ermöglicht, d.h. in Richeiner Y-Achse und einer X-Achse. Unterhalb der Säule 2 ist ein Drehteller 82 angeordnet, auf den der Prüfling 78 aufgespannt ist und der es ermöglicht, den Prüfling 78 um die Z-Achse zu drehen.

Zur Prüfanlage gehören ferner ein Prüfgerät 84, eine Schnittstellenschaltung 86, ein Rechner 88 und ein
Drucker 90. In Fig. 3 sind die Steuersignalleitungen als
mit Pfeilen versehene ausgezogene Linien eingezeichnet,
während die Meß- und Ergebnissignalleitungen als mit
Pfeilen versehene strichpunktierte Linien eingezeichnet sind. Im Betrieb steuert der Rechner 88 die Säule 2,
die Getriebekette 4, den Kreuzschlitten 80 und den Drehteller 82 derart, daß der am freien Ende der Getriebekette 4 angeordnete Gegenstand 24 in gewünschter Abfolge
alle gewünschten Stellen des Prüflings 78, beispielsweise
dessen gesamte innere Oberfläche, abtastet. Die vom als
Prüfsonde ausgebildeten Gegenstand 24 gelieferten Meßsignale gelangen über das Prüfgerät 84 und die Schnittstellenschaltung 86 zum Rechner 88, der sie auswertet
und die Auswertung am Drucker 90 ausgibt.

Der Rechner 88 weist vorzugsweise erhebliche Speicherkapazitäten auf, um neben der Steuerung und der Auswertung der Meßergebnisse eines Prüflaufes beispielsweise
die in zeitlichen Abständen bzw. nach unterschiedlichen
Betriebsstunden des Prüflings gewonnenen Prüfergebnisse
abspeichern und sie jederzeit abrufbereit mittels des
Rechners miteinander vergleichen zu können. Ein derartiger erweiterter Rechner 88 hat den Vorteil, daß z.B.
der zeitliche Ablauf bei der Entstehung von Defekten
oder z.B. das Wachstum bereits bei früheren Prüfungen
gefundener Risse verfolgt werden kann und somit Aussagen über die Rißfortschrittsgeschwindigkeiten im
Hinblick auf die zu erwartende Lebensdauer eines Bauteiles möglich sind.

Die Vorteile der erfindungsgemäßen Vorrichtung sind insbesondere anhand von Fig. 4 erkennbar, die einen kompliziert geformten Prüfling 78 zeigt, der zu einer Symmetrieachse 92 rotationssymmetrisch ist. In Fig. 4 sind für

0111940

Die Vorteile der erfindungsgemäßen Vorrichtung sind insbesondere anhand von Fig. 4 erkennbar, die einen kompliziert geformten Prüfling 78 zeigt, der zu einer Symmetrieachse 92 rotationssymmetrisch ist. In Fig. 4 sind für sechs verschiedene Stellen der Innenseite des Prüflings 78 die Verläufe der Getriebekette eingezeichnet, wobei jeweils schematisch die Getriebeglieder 14, 16 und 18 gezeigt sind und zur Unterscheidung der sechs verschiedenen Verläufe dem Bezugszeichen der Getriebeglieder die Indices "1" bis "6" hinzugefügt sind. Die Achse 8 der Säule 2 fällt mit der Symmetrieachse 92 zusammen. Es ist erkennbar, daß durch Einstellen der Winkel zwischen den Getriebegliedern, des Winkels zwischen dem Gegenstand 24 und der Getriebekette, des Winkels zwischen der Getriebekette und der Säule sowie der Länge des ersten Getriebegliedes Oberflächen auch komplizierter geometrischer Formen erreichbar und abtastbar sind. Selbst die Wand eines Hohlraumes, der nur durch einen engen Durchlaß 94 erreichbar ist, kann abgetastet werden, weil die Getriebekette sehr flach ist, wie dies unter Bezugnahme auf die Fig. 1 und 2 vorstehend erläutert ist. Das Ausführungsbeispiel der Erfindung ist in den Fig. 1, 2 und 4 ungefähr im Maßstab 1 : 1 gezeigt und läßt somit insbesondere in Fig. 1 die geringe Dicke der Getriebekette erkennen.

Die Erfindung ist nicht auf das vorstehend beschriebene Ausführungsbeispiel sowie die Anwendungsbereiche bei der Prüfanlage gemäß Fig. 3 beschränkt.

# PATENTANSPRÜCHE

1. Vorrichtung zum Manipulieren eines Gegenstandes, insbesondere eines Werkzeuges oder eines Meßfühlers, gekennzeichnet durch eine.geradlinig ihrer Achse bewegbare Säule (2), eine aus mehreren stabartigen, gelenkig miteinander verbundenen Getriebegliedern (14, 16, 18) bestehende Getriebekette (4), die an ihrem einen, ersten Ende gelenkig an der Säule aufgehängt ist und an ihrem anderen, zweiten Ende den Gegenstand (24) trägt, wobei die Getriebeglieder relativ zueinander und die Getriebekette relativ zur Säule um zueinander parallele Gelenkachsen (6, 20, 22) schwenkbar sind, und eine Antriebseinrichtung (36, 38, 48, 50, 54, 58, 60, 72, 74, 76) zum Schwenken der Getriebeglieder relativ zueinander sowie zum Schwenken der Getriebekette relativ zur Säule.

2. Vorrichtung nach Anspruch 1, dadurch gekennzeichnet, daß die Gelenkachse (6) zwischen der Getriebekette (4) und der Säule (2) senkrecht zu einer deren Achse (8) enthaltenden Ebene verläuft.

3. Vorrichtung nach Anspruch 1 oder 2, dadurch gekennzeichnet, daß die Säule (2) um ihre Achse (8) drehbar ist.

4. Vorrichtung nach einem der Ansprüche 1 bis 3, dadurch gekennzeichnet, daß zumindest eines der Getriebeglieder (14, 16, 18) längenveränderbar ist und daß die Antriebseinrichtung einen Stellmechanismus (36, 38) für die Längenänderung umfaßt.

5. Vorrichtung nach Anspruch 4, dadurch gekennzeichnet, daß das der Säule (2) nächste, erste Getriebeglied (14) längenveränderbar ist.

6. Vorrichtung nach einem der Ansprüche 1 bis 5, dadurch gekennzeichnet, daß jedes Getriebeglied (14, 16, 18) im wesentlichen die Form eines flachen Quaders hat, wobei die zugeordneten Gelenkachsen (6, 20, 22) an zwei entgegengesetzt liegenden Schmalseiten des Quaders verlaufen.

7. Vorrichtung nach einem der Ansprüche 1 bis 6, dadurch gekennzeichnet, daß der Gegenstand (24) am zweiten Ende der Getriebekette (4) um eine Gelenkachse (26) schwenkbar angelenkt ist, die zu den übrigen Gelenkachsen (6, 20, 22) parallel verläuft, und daß diese Schwenkung mittels der Antriebseinrichtung (36, 38, 48, 50, 54, 58, 60, 72, 74, 76) bewirkt wird.

8. Vorrichtung nach einem der Ansprüche 1 bis 7, dadurch gekennzeichnet, daß die Getriebekette (4) aus drei stabartigen Getriebegliedern (14, 16, 18) besteht.

9. Vorrichtung nach einem der Ansprüche 1 bis 8, dadurch gekennzeichnet, daß die maximale Länge der Getriebeglieder (14, 16, 18) vom säulennächsten Getriebeglied (14) zu den folgenden Getriebegliedern (16, 18) zunehmend geringer ist.

10. Vorrichtung nach einem der Ansprüche 1 bis 9, dadurch gekennzeichnet, daß die Antriebseinrichtung (36, 38, 48, 50, 54, 58, 60, 72, 74, 76) für jede Schwenkung um eine der Gelenkachsen (20, 22, 26) zwischen den Getriebegliedern (14, 16, 18) oder dem letzten Getriebeglied (18) und dem Gegenstand (24) einen Übertragungsmechanismus (48, 58, 60; 50, 58, 72; 54, 74, 76) aufweist, der eine drehbare Welle (48, 50, 54), die entlang den Getriebegliedern von der Säule (2) bis zu der jeweiligen Gelenkachse verläuft, ein am zu schwenkenden Getriebeglied bzw. Gegenstand festes, verzahntes Element (60, 72, 76) und ein damit unmittelbar oder mittelbar in Eingriff stehendes Zahnrad (58, 74) aufweist, das an der Welle fest ist.

11. Vorrichtung nach Anspruch 10, dadurch gekennzeichnet, daß das verzahnte Element (72, 76) und das Zahnrad (58, 74) ein Kegelradpaar bilden, wobei die Achse des das verzahnte Element bildenden Kegelrades mit der betreffenden Gelenkachse (20, 22) zusammenfällt.

12. Vorrichtung nach Anspruch 10 oder 11, dadurch gekennzeichnet, daß die Welle (48, 50) des jeweiligen Übertragungsmechanismus (48, 58, 60; 50, 58, 72) Wellengelenke (56) an denjenigen Orten aufweist, an denen die Welle durch ein Gelenk zwischen zwei Getriebegliedern (14, 16, 18) verläuft.

13. Vorrichtung nach Anspruch 12, dadurch gekennzeichnet, daß die Wellengelenke (56) einer Welle (48, 50) aus drei miteinander kämmenden Kegelrädern bestehen, deren mittleres koaxial zu der Gelenkachse (20, 22) am betreffenden Ort angeordnet ist.

14. Vorrichtung nach einem der Ansprüche 10 bis 13, dadurch gekennzeichnet, daß die Welle (48, 50, 54) des Übertragungsmechanismus (48, 58, 60; 50, 58, 72; 54, 74, 76) im Bereich eines längenveränderbaren Getriebegliedes (14) einen längenveränderbaren Wellenabschnitt (62) aufweist.

15. Vorrichtung nach Anspruch 14, dadurch gekennzeichnet, daß der längenveränderbare Wellenabschnitt (62) eine am einen Ende des längenveränderbaren Getriebegliedes (14) drehbar und axial unverschiebbar gelagerte Hülse (64) sowie einen am anderen Ende des längenveränderbaren Getriebegliedes drehbar und axial unverschiebbar gelagerten Stab (66) umfaßt, wobei der Stab durch die Hülse verläuft und diese drehfest und axial relativ zueinander verschiebbar in Eingriff miteinander stehen und wobei in diesem Wellenabschnitt (62) die Drehmomentübertragung von der Hülse zum Stab oder umgekehrt erfolgt.

16. Vorrichtung nach einem der Ansprüche 10 bis 15, dadurch gekennzeichnet, daß die Welle (48, 50, 54) des Übertragungsmechanismus (48, 58, 60; 50, 58, 72; 54, 74, 76) an ihrem säulenseitigen Ende drehfest ein Kegelrad (68) trägt, das mit einem Kegelrad (70) kämmt, das um die Gelenkachse (6) zwischen der Säule (2) und der Getriebekette (4) drehbar ist und von einem Antriebsmotor antreibbar ist.

17. Vorrichtung nach Anspruch 4 oder 5 oder einem der Ansprüche 6 bis 16 in Verbindung mit Anspruch 4 oder 5, dadurch gekennzeichnet, daß der Stellmechanismus (36, 38) eine am einen Ende des längenveränderbaren Getriebe-

0111940

gliedes (14) axial unverschiebbar angeordnete Spindel (38) mit einem Außengewinde sowie eine am anderen Ende des längenveränderbaren Getriebegliedes axial unverschiebbar angeordnete Gewindehülse (36) mit einem Innengewinde umfaßt, wobei die Gewindehülse und die Spindel miteinander in Eingriff stehen und eines dieser beiden Teile drehfest am Getriebeglied festgelegt ist, während das andere drehbar am Getriebeglied angeordnet ist und von einem Antriebsmotor antreibbar ist.

18. Vorrichtung nach Anspruch 17 in Verbindung mit Anspruch 14 oder 15, dadurch gekennzeichnet, daß die längenveränderbaren Wellenabschnitte (62) von durch das längenveränderbare Getriebeglied (14) verlaufenden Wellen (48, 50, 54) zusammen mit der Gewindehülse (36) und der Spindel (38) die einzigen Verbindungen zwischen den beiden Enden des Getriebegliedes bilden.

19. Vorrichtung nach einem der Ansprüche 16 bis 18, dadurch gekennzeichnet, daß die Antriebsmotoren elektrische Schrittmotoren sind.

20. Vorrichtung nach einem der Ansprüche 1 bis 19, gekennzeichnet durch einen Kreuzschlitten (80), an dem die Säule (2) entlang ihrer Achse (8) verschiebbar so angeordnet ist, daß ihre Achse senkrecht zu der durch die beiden Bewegungsrichtungen des Kreuzschlittens definierten Ebene verläuft.

0111940

Fig. 1

Fig. 2

Fig. 3

0111940

Fig. 4

## EUROPÄISCHER RECHERCHENBERICHT

| | EINSCHLÄGIGE DOKUMENTE | | EP 83113006.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>DE - B2 - 2 412 569</u> (DAIKIN KOGYO) <br> * Gesamt * <br> -- | 1-3,6, 7,10-12 | B 25 J 17/00 <br> B 25 J 1/02 |
| A | PATENT ABSTRACTS OF JAPAN, unexamined applications, Sektion M, Vol. 1, No. 134, 5. November 1977, THE PATENT OFFICE JAPANESE GOVERNMENT Seite 4568, M 77 <br> * Kokai-No. 52-73 463 * <br> ---- | 1-3,6, 7,10-13 | |

| RECHERCHIERTE SACHGEBIETE (Int. Cl. ³) |
|---|
| B 25 J 1/00 |
| B 25 J 7/00 |
| B 25 J 9/00 |
| B 25 J 17/00 |
| B 23 D 3/00 |
| B 23 Q 7/00 |

Der vorliegende Recherchenbericht wurde für alle Patentansprüche erstellt.

| Recherchenort | Abschlußdatum der Recherche | Prüfer |
|---|---|---|
| WIEN | 20-03-1984 | DRÖSCHER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82